(19) Europäisches Patentamt / European Patent Office / Office européen des brevets

(11) **EP 3 303 222 B1**

(12) **EUROPEAN PATENT SPECIFICATION**

(45) Date of publication and mention
of the grant of the patent:
**07.08.2019   Bulletin 2019/32**

(51) Int Cl.:
*C01F 7/44* *(2006.01)*     *C01B 13/18* *(2006.01)*
*B01J 8/18* *(2006.01)*     *B01J 8/26* *(2006.01)*
*B01J 8/38* *(2006.01)*     *B01J 8/00* *(2006.01)*

(21) Application number: **16732456.5**

(22) Date of filing: **02.06.2016**

(86) International application number:
**PCT/EP2016/062451**

(87) International publication number:
**WO 2016/193345 (08.12.2016 Gazette 2016/49)**

(54) **PROCESS AND SYSTEM FOR THERMAL TREATMENT OF GRANULAR SOLIDS**

VERFAHREN UND SYSTEM ZUR THERMISCHEN BEHANDLUNG VON KÖRNIGEN
FESTSTOFFEN

PROCÉDÉ ET SYSTÈME POUR LE TRAITEMENT THERMIQUE DE MATIÈRES SOLIDES
GRANULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **02.06.2015   DE 102015108722**

(43) Date of publication of application:
**11.04.2018   Bulletin 2018/15**

(73) Proprietor: **Outotec (Finland) Oy
02230 Espoo (FI)**

(72) Inventors:
• **STRÖDER, Michael
  60438 Frankfurt am Main (DE)**
• **STURM, Peter
  61184 Karben (DE)**
• **MISSALLA, Michael
  61440 Oberursel (DE)**
• **KLETT, Cornelis
  Forest Lake, 4078, QLD (AU)**

(74) Representative: **Keil & Schaafhausen
Patent- und Rechtsanwälte PartGmbB
Friedrichstraße 2-6
60323 Frankfurt am Main (DE)**

(56) References cited:
**EP-B1- 1 575 871     WO-A2-2008/077462**

**Description**

The present invention relates to a process for thermal treatment of granular solids, in which the solids are first heated in at least one preheating stage and then are reacted in a reactor at 700 to 1400 °C. The disclosure also includes a system for carrying out this process.

In the production of metals and their salts, thermal treatments of the raw materials are often part of the respective production process such as calcination processes for ores. Thermal treatment of solids is also necessary in the production of a metal oxide in particular because this is often produced by calcination from another metal salt, such as the production of mixed rutile phases from titanium dioxide hydrate (cf., e.g., DE 26 05 651 A1).

Production of aluminum oxide ($Al_2O_3$) from aluminum hydroxide, such as that known from EP 0 861 208 B1, for example, is of special economic importance. In this process, the moist aluminum hydroxide is first dried in a first suspension heat exchanger and preheated to a temperature of approximately 160 °C. After separating the gases in the cyclone separator, the solids are then sent to a second suspension preheater, in which the solids are dried further with the exhaust from the recycling cyclone of a circulating fluidized bed. Next, the solids are charged to a fluidized-bed reactor with a circulating fluidized bed, in which the aluminum hydroxide is calcined to aluminum oxide at temperatures of approximately 1000 °C. The exhaust gases from this fluidized bed are used as the heating medium in the second suspension preheater. Furthermore, a substream of preheated aluminum hydroxide is branched off after the first suspension preheater and mixed with the hot aluminum oxide withdrawn from the recirculation cyclone of the circulating fluidized bed. The hot product mixture is then cooled in direct contact with air in a multistage suspension cooler and then sent to a fluidized bed cooler for the final cooling. This forms aluminum oxide, which has a high gamma oxide content and can be produced with minimal heat consumption at the same time.

The process described in DE 102 60 739 B3 also comprises a circulating fluidized bed in combination with two preheating stages, where high-quality γ-aluminum oxide is produced. The preheated aluminum hydroxide is branched off after the second suspension preheater and mixed with hot aluminum oxide from the fluidized bed.

Document EP 1 575 871 B1 relates to a process and its corresponding plant for producing metal oxide from metal compounds, in particular metal hydroxide or metal carbonate. The metal compound is conveyed through two Venturi preheater into a fluidized bed reactor where it is heated there to a temperature of 650 to 1150 °C by combustion of fuel. So, metal oxide is generated. To improve the utilization of energy, it is proposed to introduce a first gas or gas mixture from below through a gas supply tube into a mixing chamber of the reactor, the gas supply tube being at least partly surrounded by a stationary annular fluidized bed which is fluidized by supplying fluidizing gas, and to adjust the gas velocities of the first gas or gas mixture and of the fluidizing gas for the annular fluidized bed to defined Particle-Froude numbers.

From document WO 2009/026989 a process in known wherein the aluminium hydroxide is calcined in a fluidized-bed reactor upon preheating in at least one preheating stage and is then supplied to at least one fluidized-bed cooler. Therein, the calcined solids are cooled by means of fluidizing air, wherein the fluidizing air is withdrawn from the cooler and introduced into the fluidized-bed reactor as secondary air. In order to minimize the specific energy consumption in partial-load operation of the plant, the secondary air stream is divided and a bypass stream is guided past the fluidized-bed reactor and introduced into a delivery conduit for the solids.

Document WO 2008//077462 A2 relates to a process for producing e.g. anhydrous metal oxide from metal hydroxide, wherein the metal hydroxide is at least partly dehydrated and preheated, before the metal hydroxide is introduced into a fluidized-bed reactor, in which the metal hydroxide is heated to a temperature of about 650 to about 1250 °C by combustion of fuel. So, metal oxide is generated, wherein primary air and/or secondary air enriched with oxygen is supplied to the fluidized-bed reactor. To achieve a rather low dust emission and a small amount of grain disintegration, the oxygen or the gas enriched with oxygen is introduced into the fluidized-bed reactor with a low gas velocity.

One problem with this process is a substantial disintegration of the grains of the intermediate and final products, which is measured as an increase in the grain content with particles sizes smaller than 45 μm. Therefore, this results in airborne dust, which must be removed from the process and leads to the loss of valuable product.

Furthermore, it is far more critical that dust with a particle diameter of 10 μm or less is respirable, so it can enter the lungs. Such dust can cause pulmonary damage or cancer, which is why job-site limit values here are kept relatively low.

Finally, the narrowest possible grain size distribution is also desirable because this improves product quality. The price to be achieved also increases with the product quality.

Therefore, the object of the present invention is to provide a process with which the grain disintegration during the thermal treatment of granular solids, in particular including aluminum hydroxide in its conversation to aluminum oxide, can be reduced significantly.

This object is achieved by a process having the features of claim 1.

According to the invention, the granular solid is first fed into a preheater, where this preheating has at least one preheating stage, preferably two preheating stages. Then the preheated solids are transferred to a reactor, which is operated at 700 to 1400 °C, preferably 800 to 1200 °C, especially preferably at 950 to 1050 °C. Grain disintegration can be reduced significantly by heating the solids in at least one preheating stage with a dwell time (residence time) of ≥15 s and an average temperature gradient of <15K/s. The average temperature gradient (TG) here is to be understood as the average increase in temperature (ΔT) over the entire dwell time (Δt), namely:

$$TG = \frac{\Delta T}{\Delta t}$$

The process conditions according to the invention are based on the finding that, during preheating, there is a conversion of the crystal lattice. Due to the conversion of the crystal lattice, instabilities occur in the lattice, so that the individual grains become very sensitive to mechanical stresses, such as abrasion, impacts, etc. It has surprisingly been found that it is possible for defects in the crystal lattice to heal when there is a very slow conversion of the crystal structure, so that the number of possible fractures in the grains is reduced significantly and therefore the grain disintegration is also reduced significantly.

In addition, it must be assumed that in dehydration of the granular solids, for example, in conversion of the respective trihydrate to the monohydrate, as is the case in calcination of alumina, the water vapor emerging from the particles also constitutes a mechanical stress on the particle. The slower the heating of the grain, the better the water vapor can escape from the grain without resulting in grain fracture due to water vapor explosions.

In a preferred embodiment of the invention, the solids are preheated at a dwell time of ≥30 s, preferably ≥60 s, especially preferably ≥90 s and most especially preferably ≥180 s, to reliably permit healing of defects in the crystal lattice.

It is also advantageous if the temperature gradient is <15 K/s, preferably <13 K/s, especially preferably <10 K/s and most especially preferably <7 K/s because in this way the preheating and removal of the water of crystallization take place in a particularly gentle manner and thus without damage to the crystal lattice.

According to one embodiment of the idea according to the invention, the solids are first heated rapidly, which corresponds to average heating above the average temperature gradient over the entire dwell time. The temperature gradient based on the first 10% of the total dwell time is greater than the temperature gradient based on the total dwell time. It is preferably at least twice as great, most especially preferably three times as great as the temperature gradient over the total dwell time. The material is therefore brought to a comparatively high temperature very quickly without any great heat loss, while at the same time the individual particles are stabilized by gradual heating and/or, in the extreme case, are stabilized even in a thermal treatment remaining at a certain temperature.

The effect of the reduced grain disintegration in the conversion of aluminum trihydrate (Al(OH)$_3$) to aluminum monohydrate (AlO(OH)) in particular shows why the process according to the invention is particularly suitable for the conversion of aluminum hydroxide to aluminum oxide.

Flue gas, for example, may be used as the heating medium for preheating. At the same time, a salt melt is also suitable as the heating medium because it has a very high thermal capacity.

According to one embodiment of the invention, at least two, preferably three or more preheating stages are provided, wherein the solids are heated with a dwell time of ≥15 s and an average temperature gradient of <15 K/s in at least one preheating stage.

An embodiment in which the solids are heated with a dwell time of ≥15 s and with an average temperature gradient of <15 K/s in all the preheating stages is especially preferred because a gentle heat treatment is ensured in each stage.

According to a preferred embodiment of the present invention, the preheating includes two preheating stages, wherein the solids are heated to a temperature between 140 and 180 °C, preferably 160 to 170 °C in the first preheating stage and/or to a temperature of 200 to 400 °C, preferably 300 to 350 °C in the second preheating stage, which is downstream from the first preheating stage.

In preheating aluminum hydroxide in particular and with the associated conversion of aluminum trihydrate to aluminum monohydrate, it is advisable to divide the preheating into the two aforementioned temperature ranges. This is due to the fact that, in the conversion of aluminum trihydrate to aluminum monohydrate, the critical conversion of the metal lattice takes place primarily in the second preheating stage, so that in a particularly preferred embodiment, the solids are heated to 200 to 400 °C, preferably 300 to 350 °C, in a preheating stage downstream from the first preheating stage, with a dwell time of ≥15 s and an average temperature gradient of the solids of <15 K/s. This makes it possible to ensure that defects in the crystal lattice that occur during the conversion are healed and that potential fractures are definitely reduced.

In addition, it has proven to be advantageous if, when using at least two preheating stages, one being downstream from the other, the solids are heated in countercurrent with the heating medium, so that the temperature difference between the solids and the heating medium remains approximately constant and a particularly good transfer of heat is achieved. In particular due to the approximately identical temperature difference, it is possible to ensure that the temperature gradient remains at <15 K/s.

In addition, according to a preferred embodiment of the invention, at least one preheating stage is designed as a ring fluidized bed. The preheating stage in which the dwell time is ≥15 s and the temperature gradient is <15 K/s is preferably designed as a ring fluidized bed. The design as a ring fluidized bed has the advantage that such a ring fluidized bed includes a fluidized bed with a fluidized mixing chamber above it (cf. DE 102 69 733 A2). For reasons associated with the heat balance, the actual fluidized bed has a lower temperature than the fluidized mixing chamber of the same ring fluidized bed preheating. The temperature of the ring fluidized bed is typically 200 to 500°C, preferably 280 to 310 °C, and the temperature of the fluidized mixing chamber is between 325 and 340 °C, preferably 330 °C, but in some cases even up to 550 °C. The temperature in the ring fluidized bed is always lower than the temperature in the fluidized mixing chamber because of the endothermic reaction. When the solids first enter the ring fluidized bed, they are slowly heated there until being discharged, because of the water loss, back into the fluidized mixing chamber, where the solids are heated at higher temperatures. In this way, a modified temperature gradient over time is achieved in the ring fluidized bed by the fact that the heating of each individual grain takes place more slowly.

In an alumina production process, a ring fluidized bed is preferably used in a preheating stage downstream from the first preheating stage to heat the solids from 200 to 400 °C, especially preferably from 300 to 350 °C.

In addition, it has proven to be advantageous that, in at least one preheating stage, the solids are first supplied to a warming device and then to a residence time reactor. Therefore, preheating devices whose design fundamentally ensures that there are no long dwell times, and in particular no dwell times of ≥15 s, may also be used. Then the solids are first heated in the heating device and then sent to a residence time reactor, so that the dwell time of the solids and the respective temperature range of preheating can be increased substantially.

When using a two-part stage, consisting of heating and a residence time reactor, it has proven advantageous to use a flash reactor or a plug-flow reactor as the heating device, because these are relatively favorable types of reactors that have become established in installation design and are usually simple to operate.

When using a flash reactor or a plug-flow reactor, it has been found to be particularly advantageous to operate this heating device in countercurrent because in this way the temperature difference between the solids and the heating medium is practically constant and thus a higher heat transfer is possible on the whole. The heat transfer preferably takes place in a flash reactor or a plug-flow reactor by way of indirect heat exchange with high-pressure steam, molten salt or hot exhaust gases from other process stages as the heating medium.

The residence time reactor may be designed as a simple fluidized-bed reactor or as a chute, preferably with a variable cross section, with a solid valve designed to create a backlog, which makes it possible to regulate the level.

However, it has been found to be particularly favorable to use a so-called immersion pot or seal pot. Then the stream of granular solids is taken from a solids container or from the preheater itself through a descending line (downpipe). At the bottom of the downpipe, the solids are fluidized by the supply of a fluidizing gas and conveyed to a higher level through an ascending line (riser) branching off from the downpipe. The stream of solids discharged from the system and thus the dwell time itself can be adjusted by adjusting the fluidizing gas. This offers the special advantage that a conveyance device for the solids and the residence time reactor can be implemented in one apparatus at the same time.

The residence time reactor can also be heated to the final temperature. This offers the advantage that a certain final temperature can be achieved in a targeted manner in this way.

However, in another embodiment of the invention, it is also possible to operate the residence time reactor adiabatically, so that the design of the equipment is greatly simplified. In adiabatic operation, a uniform temperature of all particles is achieved, so that it is quite possible to cool individual particles. However, the deciding factors when using a residence time reactor is that the particles will rest for a time period long enough to heal defects in the crystal lattice.

It is preferred that the temperature of the residence time reactor is max. +/- 30 K of the warming reactor's temperature. Even more preferably, the differences between the temperature of both reactors of one preheating stage is ≤ 20 K even more preferred ≤ 10 K.

The combination of the warming device and the residence time reactor has the advantage that the solids are not heated uniformly but instead are heated rapidly at the start and then the ongoing thermal treatment in the residence time reactor leads to a stabilization of the grain structure. The average dwell time is the sum of all the dwell times in the system of the heating device residence time reactor.

Finally, it is also possible to combine a large number of stirred vessel stages for preheating, so that the solids are heated there gently, step by step, by maintaining a dwell time of ≥15 s in the individual stirred vessels, with an average temperature gradient of < 15 K/s in the individual stirred vessels. In the production of aluminum oxide, a dwell time of ≥15 s and an average temperature gradient of <15 K/s must preferably be adjusted only in the case of preheating at temperatures between 280 and 400 °C. In this variant, the heating medium may be carried in countercurrent with the individual vessels.

The longer dwell times, which also lead to longer process times on the whole, can be compensated by higher flow rates at other points in the process.

In particular it has been found to be advantageous to separate the gas and solids from one another by means of a centrifugal separator between the individual preheating stages and/or a preheating stage and the reactor and/or between the warm-up reactor and the residence time reactor to thereby prevent extremely high volume flows and, associated with that, a very large and expensive dimensioning of the system. These centrifugal separators have the advantage of high flow rates, preferably between 20 and 50 m s$^{-1}$, because the separation efficiency of the centrifugal separator can be increased in this way.

The capacity of hydrate precipitation, e.g., in precipitation of aluminum hydroxide from the aluminate solution can advantageously also be increased as a step of the synthesis process by the Bayer process. The hydroxide, which is precipitated more rapidly in this way, also results in increased grain disintegration in a state-of-the-art process, but this can be compensated by the process according to the invention.

Despite the prolonged dwell time of the solids in preheating, the production of the overall process per unit of time may remain the same or may even be increased due to high flow rates to the centrifugal separator and in the centrifugal separator and/or an increased precipitation rate in hydrate precipitation.

An installation is suitable for carrying out the process described above. Such an installation includes at least one preheating stage for preheating the solids and a reactor for reacting the solids at 700 to 1400 °C. The at least one preheating stage is designed so that the average temperature gradient of the solids in preheating is <15 K/s and the dwell time of the solids is ≥15 s. A lower grain disintegration can be ensured through this design because defects in the crystal lattice, which form intended breaking points, can be healed or may even be prevented from occurring at all.

It has also proven to be advantageous to design the reactor for reacting the granular solids at 700 to 1400°C as a fluidized-bed reactor because good mass transport and heat transport at the same time can be ensured in this way.

One embodiment of the invention provides that the preheating stage is designed as an annular fluidized-bed reactor. This offers the possibility of ensuring long dwell times, on the one hand, while, on the other hand, the solids enter the ring fluidized bed, which is at a lower temperature than the fluidized mixing chamber, for reasons pertaining to the heat balance. The temperature gradient of the solids during heating is therefore reduced, so that the conversion takes place more slowly, and furthermore, the loss of water due to evaporating water of crystallization no longer takes place all of a sudden but instead takes place more slowly, which reduces the damage caused by explosions of water vapor. According to another embodiment of the invention, at least one preheating stage is formed by a warm-up reactor and a residence time reactor, wherein the warming here takes place with a relatively short dwell time and then the solids remain in the residence time reactor up to a total dwell time of ≥15 s at the respective target temperature, so that damage to the crystal lattice can also be healed.

A cyclone may be used for separation of particles and gas between the warming reactor and the residence time reactor, so that extremely high total volume flows need not be carried into the residence time reactor.

Additional features, advantages and possible applications of the invention are derived from the following description of exemplary embodiments and the drawings. All the features described and/or illustrated graphically here form the subject matter of the invention, either alone or in any desired combination, regardless of how they are combined in the claims or in their references back to preceding claims.

The drawings show schematically:

Fig. 1 shows schematically a system for carrying out the process

Fig. 2 shows a preheating stage for carrying out the process according to the invention,

Fig. 3 shows schematically a system for carrying out the process according to the invention with a flash reactor and a residence time reactor,

Fig. 4 shows schematically a first system complex for carrying out the process according to the invention,

Fig. 5 shows schematically a second system complex for carrying out the process according to the invention, and

Fig. 6 shows schematically a third system complex for carrying out the process according to the invention.

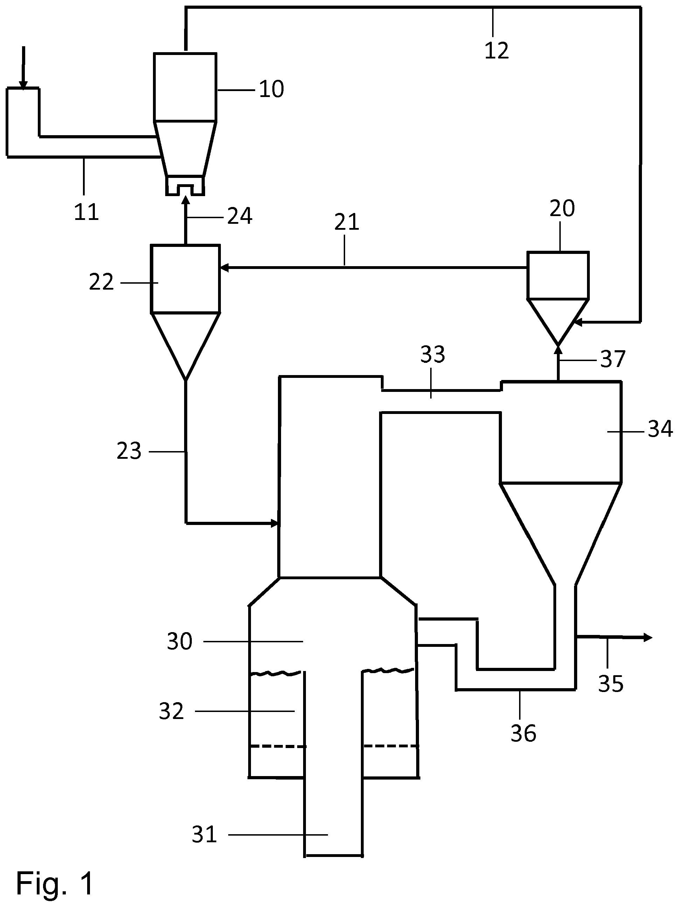

Fig. 1 shows schematically a system for carrying out the process according to the invention for production of aluminum oxide. The starting material is aluminum oxide, which is supplied as a granular solid through a feed 11, for example, a screw conveyor, which sends it to the first preheating stage, where it is heated to 160°C. The heated solids are then sent through line 12 to a second preheating stage.

The aluminum hydroxide is heated further to a temperature of 400°C in the second preheating stage 20. The preheating takes place here with a dwell time of 15 s and a temperature gradient of 13K/s, for example. To ensure this, the preheating stage 20 may also be designed in two stages, namely consisting of a preheating device and a residence time reactor.

Next, the partially dehydrated aluminum hydroxide is sent to a centrifugal separator 22 through a line 21. If the preheating stage 20 is designed in two steps, then it has proven advantageous in particular to position the residence time reactor downstream from the centrifugal separator 22 because in this way the residence time reactor can be designed with smaller dimensions.

Next, the heated solids are sent to a fluidized-bed reactor 30, which is supplied with gas through a line 31, so that aluminum hydroxide is calcined to aluminum oxide in a fluidized bed 32 at temperatures of 950 °C.

It has proven advantageous to design the fluidized-bed reactor 30 as a circulating fluidized bed. To do so, a gas stream carrying the hot solids is supplied through a line 33 to a cyclone, in which the solids are separated from the gases. Some of the solids from the cyclone 34 are removed from the process through a line 35 and sent to a cooling unit (not shown), for example. The remaining solids are recirculated through a line 36 back into the fluidized bed 32 in the fluidized-bed reactor 30.

Instead of the fluidized-bed reactor 30, another calcination reactor may also be used, for example, a flash reactor.

The hot gas separated in the cyclone 34 can be removed through line 37 and used as the heating medium in a preheating stage. Using it in the second preheating stage 20 has turned out to be advantageous in particular because larger quantities of heat are necessary here than in the first preheating stage 10.

To increase the energy efficiency of the system, the hot gas may also be sent from the cyclone 22 through a line 24 to the first preheating stage 10 and/or heat generated in the cooling of the product (not shown) may be utilized in at least one of the preheating stages 10, 20.

One problem with recycling the heated gases to the preheating stage designed according to the invention is that the temperatures can fluctuate greatly there. For example, temperature fluctuations between 970°C and 1100°C must be assumed in production of aluminum. Temperature regulation is thus absolutely essential.

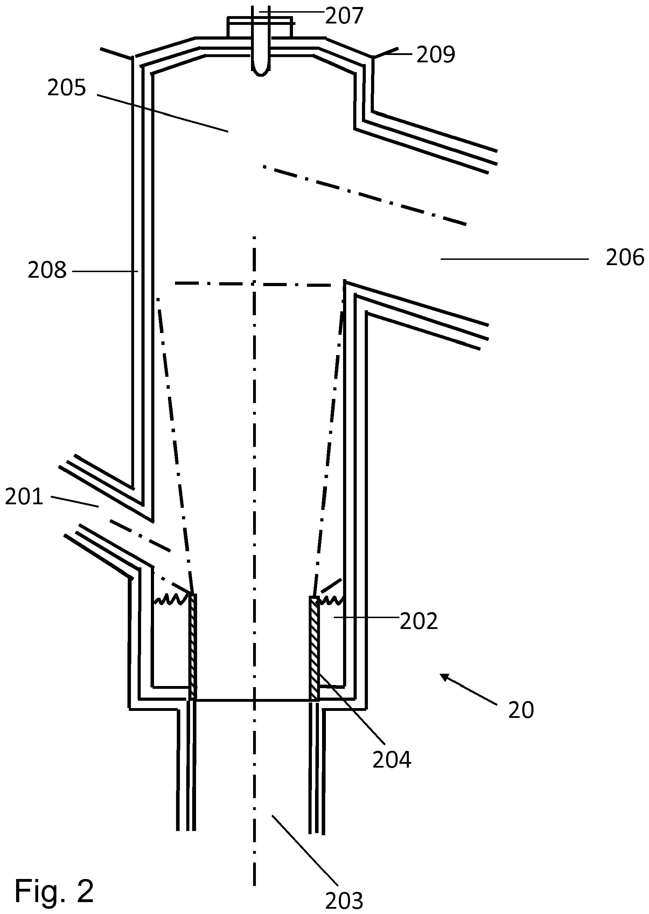

The preheating stage 20 for carrying out the process according to the invention shown in Fig. 2 is designed as a ring fluidized-bed reactor.

The granular solids are introduced into the preheating stage 20 through a feed 210. The solids enter a fluidized bed 202 there.

The solids are brought to the temperature required for the reaction in this fluidized bed 202 by means of the gas introduced through a line 203 into a central tube 204. Preheated solids repeatedly enter the ring-shaped fluidized bed 202 into a fluidized mixing chamber 205 formed above it, where they are partially removed from the preheating stage 20 through an outlet 206. The remaining amount of solids drop back into the fluidized bed 202.

The preheating stage 20 is preferably designed with a double jacket 208 to prevent heat losses.

The central tube 204 has the thinnest possible wall thickness of 100 or 150 mm to permit the best possible heat transfer.

If there is a shortage of hydrate, the solids can also be acted upon by water from a nozzle 207 in the fluidized mixing chamber 205.

An endothermic reaction normally takes place in the fluidized mixing chamber 205: aluminum trihydroxide to aluminum monohydroxide. This causes a strong cooling of the exhaust gas from the reactor 30. If the hydrate mass stream 201 entering the reactor is then reduced, less reaction heat is consumed accordingly, the exhaust gas from the reactor 30 is not cooled sufficiently and the downstream equipment and pipelines are threatened with damage. Therefore, water is sprayed in through the nozzle 207 and completely evaporates at the temperature of the second preheating stage. Then the heat of evaporation of the water entirely or partially replaces the reduced heat consumption for the chemical reaction.

The cover of the preheating stage 20 is connected to the reactor by welded flange connections 209, so that the reactor can be opened relatively easily and the central tube 203 can be replaced.

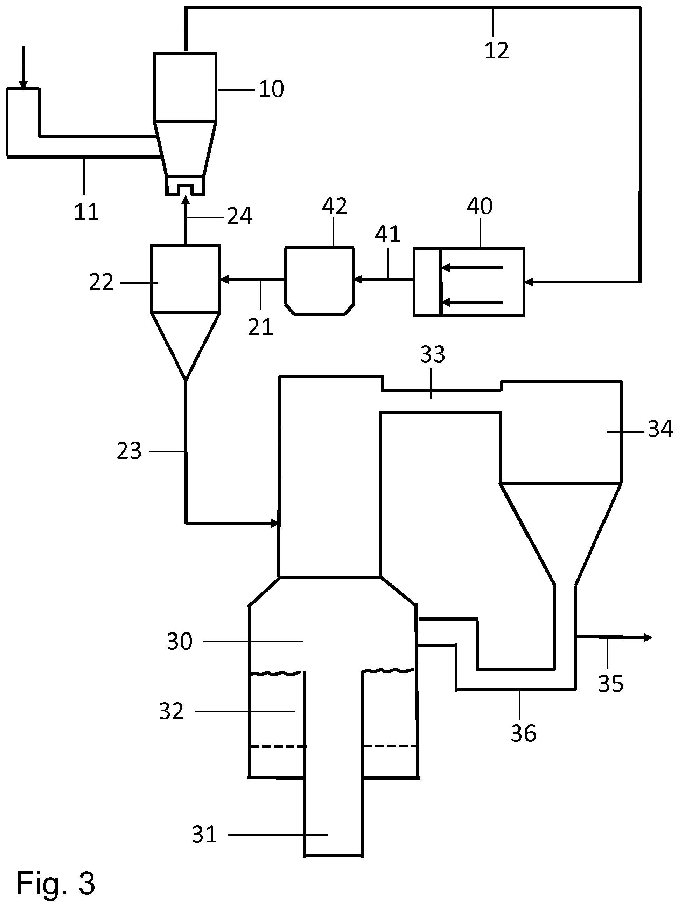

Finally, Fig. 3 corresponds essentially to Fig. 1 and also shows the diagram of a calcination installation for carrying out the process according to the invention. The individual preheating stage 20 designed as a ring fluidized bed is replaced here by a heating reactor 40 and the downstream residence time reactor 42.

The material to be preheated is conveyed through line 12 to the heating reactor 40. This heating reactor 40 can be operated with hot gases from the cyclone 34 or by some other process. There is preferably rapid heating of the solids here, i.e., with a temperature gradient in the first 10% of the total dwell time which is above the temperature gradient over the total dwell time.

The temperature gradient obtained as the quotient of the temperature difference to the total dwell time is regarded as the average temperature gradient over the total dwell time. The temperature difference is the difference between the inlet temperature of the solids on entrance into the warming reactor 40 and the outlet temperature of the solids on discharge of the solids from the residence time reactor 42. The total dwell time corresponds to the dwell time between the entrance and outlet of the solids out of the residence time reactor 42.

The material heated in this way, preferably already at a temperature at most 20°C, preferably only 10°C from the final preheating temperature to be reached, is removed from the warming reactor 40, which is preferably designed as a flash reactor, through line 41 and sent to the residence time reactor 42. The residence time reactor 42 is especially advantageously designed, so that it serves as the solids transport device at the same time, which is implemented, for example, by an immersion pot.

Then the preheated solids go through line 21 into the downstream system parts known from Fig. 1.

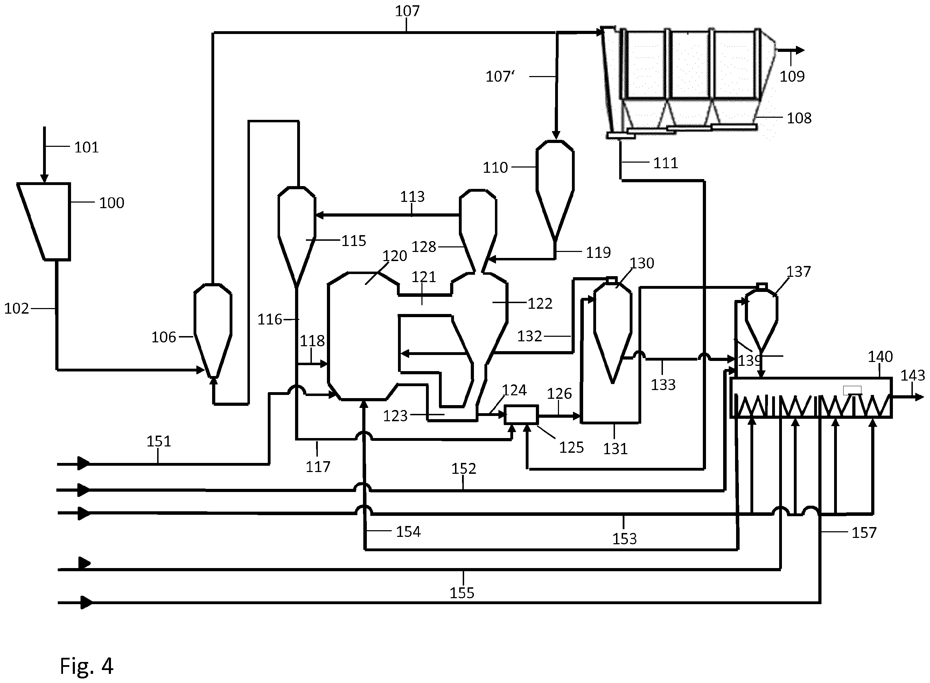

According to the flow chart of the process according to the invention shown in Fig. 4, moist aluminum hydroxide $(Al(OH)_3)$ is charged through line 101 to a hydrate filter 100, where it is cleaned with wash water.

The hydrate filter is preferably equipped with a vapor hood, so that the hydrate is already partially dried during filtration. The filtrate is sent through line 102, preferably by a conveyor screw (not shown) to a first preheating stage 106, where it is preheated to a temperature between 100 and 200 °C.

Then the hydrate is sent through a line 107, 107' into a Venturi nozzle 110, out of which the exhaust gases are sent through line 112 into an electrostatic gas purification (ESP) 108. From there, the exhaust gases are sent at a temperature of 110 to 170 °C, preferably 120 to 140 °C, through the line 109 into a chimney (not shown). The solids emerging from the electrostatic gas purification 108 then pass through a line 111 directly to the product of calcination.

The solids are conveyed out of the solid separator 110 through line 119 and into a second preheating stage 128. In this stage, the solids are heated to a temperature of 150 to 300 °C and sent to a separating cyclone 115 through line 113. The exhaust gas stream of the separating cyclone 115 is sent through line 114 to the heat exchanger 106, to heat the hydrate and convey it to the electrostatic filter 118.

The solids from the separation cyclone 115 are sent through lines 116 and 118 to a fluidized-bed reactor 120, where the solids are calcined at temperatures of 850 to 1100 °C, in particular approximately 950 °C, and dehydrated to aluminum oxide $(Al_2O_3)$.

The feed of the fuel required for the calcination takes place through a line 151, which is arranged at a slight height above the grating of the fluidized-bed reactor 120.

The gas streams containing oxygen required for combustion are sent through a feed line 154 as a fluidizing gas and through line 132 as secondary air. As a result of the gas feed, a relatively high suspension density is established in the lower area of the reactor, between the grating and the secondary gas feed 132, while a comparatively low suspension density prevails above the secondary gas feed 132. Without further heating, the primary air is fed at a temperature of approximately 80 °C into the fluidized-bed reactor 120 after the usual compression, where the temperature of the secondary air is approximately 550 °C.

The gas-solids suspension enters the recirculation cyclone 122 of the circulating fluidized bed through line 123, where there is a renewed separation of solids from gas. The solids leaving the recirculation cyclone 122 through line 124 at a temperature of approximately 950°C are fed into a mixing container 125. The solids separated in the electrostatic gas purification 108 and the solids from lines 116, 117 are also mixed in the mixing container 125 through line 111. The mixing container 125 preferably has a fluidized bed to achieve a complete and thorough mixing. Long dwell times of 30 minutes or more are also advantageous here.

The resulting product is supplied to a suspension cooler 130 through a line 26, 131' from mixing container 125. The exhaust gas from the suspension cooler 130 goes through line 132 as the secondary air into the fluidized-bed reactor 120. The solids from the suspension cooler 130 are introduced into the suspension cooler 137 through line 133, 139. The exhaust gas is returned to the cooler 130 through line 131, 131', while the solids are removed through line 138.

The aluminum oxide from line 138 is subjected to a final cooling in a fluidized-bed cooler having a plurality of cooling chambers, which are charged with fluidizing air through a line 150. The aluminum oxide enters the first chamber at a temperature of approximately 300°C and heats a liquid heating medium, in particular water, to a temperature of 140 to 195°C. In a second heating chamber, the aluminum oxide is also cooled with water, which is supplied through line 155 and removed again through line 157. Gas is preferably used for cooling in the one or two following chambers of the fluidized bed cooling 140.

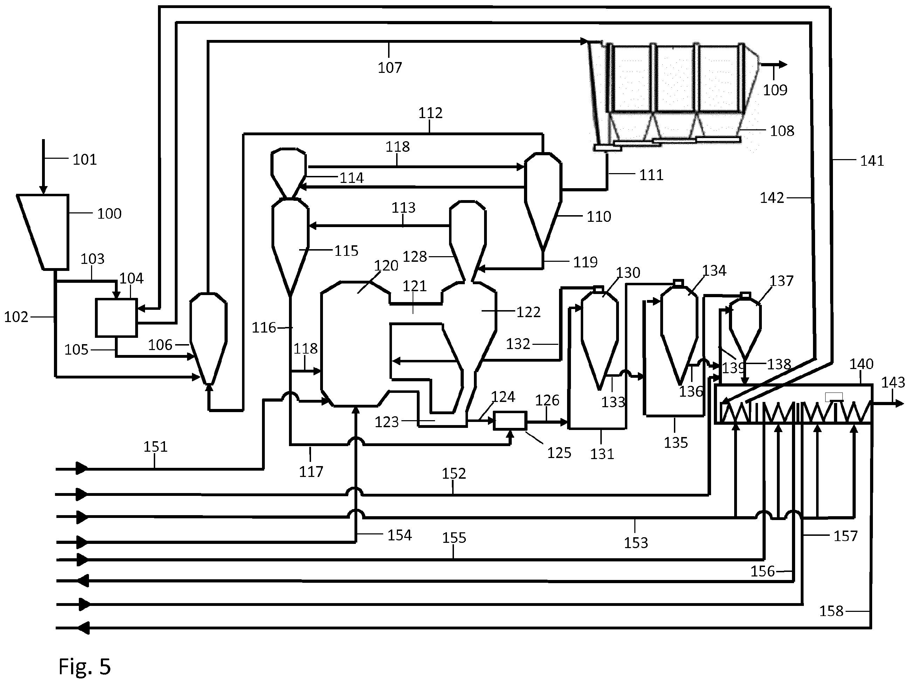

Fig. 5 shows a system of a similar design for calcination, but differentiated in several regards from the process illustrated in Fig. 4.

First, a line 103, which opens into a hydrate dryer 104, branches off from the line 102. The hydrate is heated to a temperature of 100 to 110°C in the hydrate dryer by indirect heat exchange with a liquid heating medium, in particular water, and then is dried almost completely starting from a moisture content of approximately 6% by weight. Next, it is sent to the preheating stage 106 through a line 105 in a known way.

The water for heating the hydrate comes from the fluidized bed cooling 140 of the product and is supplied through line 141 and then removed again through line 142, thus creating a closed circuit between the hydrate dryer 104 and the first chamber of the fluidized bed cooling 140.

In addition, a process according to Fig. 5 has another preheating stage, so that this shows the preheating stages 106, 114 and 115. The material is therefore supplied first through the line 111 to the second preheating stage 114, from which it goes through the line 118 to the centrifugal sections 110. The exhaust gases from the centrifugal section 110 are supplied in a known way through line 112 only to the first preheating stage 106 and thus serve as the heating medium. The solids are sent through line 119 to a second preheating stage 128 and from there through line 113 into a centrifugal segment 115.

Finally, Fig. 5 shows another suspension heat exchanger, so that there are a total of three suspension heat exchangers 130, 134 and 137 downstream from reactor 120.

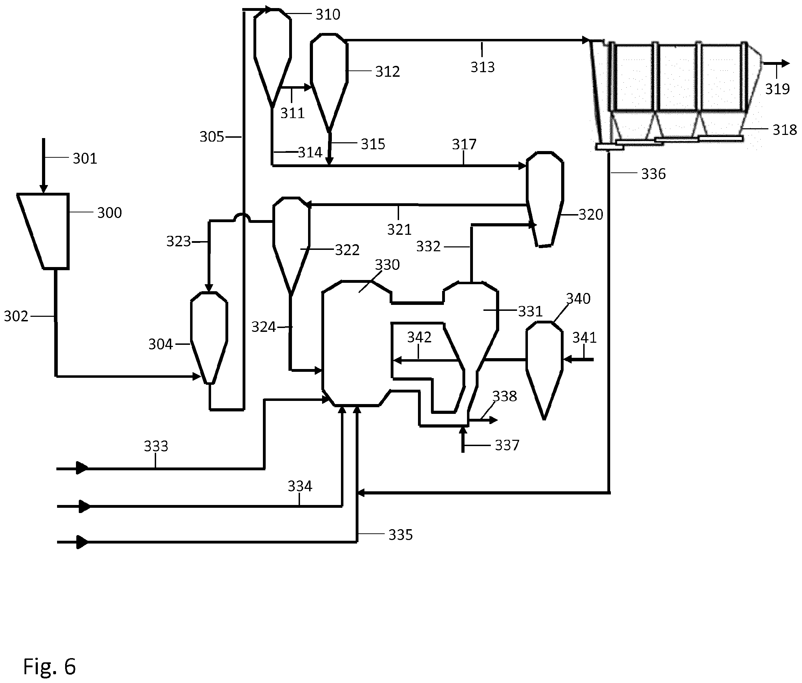

Fig. 6 shows a greatly simplified process for producing $Al_2O_3$, where the material is charged through line 301 and hydrate filter 300. The reactant is removed through line 302 and sent to the first preheating stage 304. The preheated material is sent to the centrifugal separator 310 through the line 305.

The exhaust gas is sent through line 311 to a second centrifugal separator 312. The solids are discharged into line 317 through lines 314 and 315.

The collected exhaust gas is sent through line 313 to an electrostatic gas purification 318, from which purified exhaust gases escape through line 319, while the solids are discharged through line 336.

The solids reaching the second preheating stage 320 through 317 are further heated there with an appropriate dwell time in the manner according to the invention and then sent through line 321 to a second centrifugal separator 322, which carries the solids through line 324 into the fluidized-bed reactor 330 and its respective centrifugal separator 331. The solids are separated by additional feed of fluidizing gas through line 335 and removal of the solids through line 338.

The exhaust gas from the centrifugal separator 322 is sent as the heating medium through line 323 to the first preheating stage 304.

Fuel is supplied to the reactor 330 through line 333 for creating the desired temperature. Fluidizing air enters the reactor through line 334. Additional gas is conveyed into the reactor through line 335, also conveying the solids out of line 336.

In addition, secondary air from line 341 goes through cyclone 340 and line 342 into the reactor 330.

**Example 1**

In a system equipped according to the diagram in Fig. 6, 50,000 kg/h aluminum hydrate with a moisture content of 7 wt-% water is fed into the system at ambient temperature. In the first preheating stage 304, the hydrate is brought to a temperature of 170 °C. Next it is heated to 370 °C in a second preheating stage 320 before being calcined at 1000°C in the reactor 332. The following particle fractions with particles <45 $\mu$m in size are obtained in the second preheating stage, depending on the course of heating, from 170 °C to 370 °C for a given time:

Table 1:

| Test | Dwell time | Heating ramp (n) | Particle fraction <45$\mu$m |
|---|---|---|---|
| V1 | 10 s | 20 K/s | 39% by wt. |
| V2 | 30 min | 0.111 K/s | 33% by wt. |
| V3 | 60 min | 0.056 K/s | 29% by wt. |
| V4 | 90 min | 0.037 K/s | 29% by wt. |
| V5 | 60 min | 1 min at 3 K/s + 59 min at 0.0056 K/s | 29% by wt. |

Test V1 shows traditional heating: In comparison with that, tests V2, V3 and V4 show that the particle fraction can be greatly reduced by definitely heating more slowly. Test V5 shows that even a first rapid heating with a first ramp and subsequent stabilization by a second heating ramp, which is much slower, still yield the effect according to the invention, which can be understood as an interaction of the heating rate and the dwell time.

**Example 2**

In a system equipped according to the diagram in Fig. 1, 250,000 kg/h aluminum hydrate with a moisture content of 7 wt-% water is fed into the system at ambient temperature. In the first preheating stage 10, the hydrate is brought to a temperature of 165 °C. Next it is heated to 330 °C in a second preheating stage 20 before being calcined at 1000 °C in the reactor 30.

In a first run, particles' residence time in the second preheating stage 20 is ≤2-5 s. Due to a temperature rising of 165 °C (= 330 °C - 165 °C) the heating rate is between 33 and 82,5 K/s and, therefore, >15 K/s. As a result, about 5 wt-% particles with a diameter ≤ 10 $\mu$m are obtained.

In comparison, a system according to Fig. 3 is used. Again, 250,000 kg/h aluminum hydrate with a moisture content of 7 wt-% water is fed into the system at ambient temperature. In the first preheating stage 10, the hydrate is brought to a temperature of 165 °C. In a second preheating stage 40 it is heated to 330 °C with and average residence time between 2 and 5 s (like above) and afterwards fed into a residence time reactor 42 (holding reactor) before being calcined at 1000 °C in the reactor 30. In the residence reactor, the preheated material is stored at a temperature between 280 and 350 °C, preferably at the same temperature as the target temperature of the second preheating stage 42 (here: 330 °C) in such that way, that the sum of the average residence times in the second preheating stage 40 and the afterwards residence reactor is 15 s, which leads to an average temperature gradient of 11 K/s. In comparison to a system described above, the amount of particles with a diameter $\leq 10~\mu$m is reduced from 5 to 3 wt-%.

By further increasing the average residence time in the residence time reactor to an overall average residence time of 180 s, particle breakage can be reduced further due to the healing of defects in the crystal lattice by keeping the particles and the temperature of the second preheating stage. The average temperature gradient for such a system would be 0.92 K/s. As a result, only 1 -2 wt-% of the particles show a diameter $\leq 10~\mu$m for a process in fig. 3 using the given values.

As a result, it is possible to reduce particles breakage significantly by extending residence times and, therefore, also average temperature gradient over the preheating itself and the residence reactor afterwards. So it is possible to increase the turnover of plants for calcining alumina.

**List of Reference Numerals**

| | |
|---|---|
| 10 | preheating stage |
| 11,12 | line |
| 20 | preheating stage |
| 21 | line |
| 22 | cyclone |
| 23,24 | line |
| 30 | reactor |
| 31 | line |
| 32 | fluidized bed |
| 33 | line |
| 34 | cyclone |
| 35-37 | line |
| 40 | warming reactor |
| 41 | line |
| 42 | residence time reactor |
| 100 | hydrate filter |
| 101-103 | line |
| 104 | hydrate dryer |
| 105 | line |
| 106 | preheating stage |
| 108 | electrostatic gas purification |
| 109 | line |
| 110 | solids separator |
| 111-113 | line |
| 114 | preheating stage |
| 115 | solids separator |
| 116-118 | line |
| 120 | fluidized-bed reactor |
| 121 | line |
| 122 | solids separator |
| 123, 124 | line |
| 125 | mixing container |
| 126 | line |
| 130 | suspension cooler |
| 131-133 | line |
| 134 | suspension cooler |
| 135, 136 | line |

| | |
|---|---|
| 137 | suspension cooler |
| 138, 139 | line |
| 140 | fluidized bed cooler |
| 141-143 | line |
| 151-158 | line |
| 201 | feed |
| 202 | annular fluidized bed |
| 203 | line |
| 204 | central tube |
| 205 | fluidized mixing chamber |
| 206 | outlet |
| 207 | nozzle |
| 208 | double jacket |
| 209 | welded flange connections |
| 300 | hydrate filter |
| 301, 302 | line |
| 304 | preheating stage |
| 305 | line |
| 310 | centrifugal separator |
| 311 | line |
| 312 | centrifugal separator |
| 313-317 | line |
| 318 | electrostatic gas purification |
| 319 | line |
| 320 | preheating stage |
| 321 | line |
| 322 | centrifugal separator |
| 324 | line |
| 330 | fluidized-bed reactor |
| 331 | recirculation cyclone |
| 333-338 | line |
| 340 | centrifugal separator |
| 341,342 | line |

## Claims

1. A process for thermal treatment of granular solids, in particular for production of aluminum oxide from aluminum hydroxide, in which the solids are heated in at least one preheating stage and then are reacted in a reactor at 700 to 1400 °C, **characterized in that,** the average temperature gradient of the solids amounts to <15 K/s and the dwell time of the solids amounts to ≥15 s in at least one preheating stage.

2. The process according to claim 1, **characterized in that** the solids are heated to 140 to 180 °C in a first preheating stage and/or heated to 200 to 400 °C in a preheating stage downstream from the first preheating stage and/or in the downstream preheating stage, the average temperature gradient of the solids amounts to <15 K/s and the dwell time of the solids amounts to >15 s.

3. The process according to claims 1 or 2, **characterized in that** the average temperature gradient of the solids in the first 10% of the dwell time is above the average temperature gradient over the entire dwell time.

4. The process according to claim 3, **characterized in that,** the average temperature gradient of the solids in the first 10% of the dwell time is more than twice as great as the average temperature gradient over the total dwell time.

5. The process according to any one of the preceding claims, **characterized in that** the solids are heated in countercurrent with the heating medium in at least two preheating stages connected after one another.

6. The process according to any one of the preceding claims, **characterized in that** at least one preheating stage is designed as a ring fluidized bed.

7. The process according to any one of the preceding claims, **characterized in that** the solids are first sent to a warming reactor in at least one preheating stage and then are sent to a residence time reactor.

8. The process according to claim 7, **characterized in that** the residence time reactor is operated in such a way that a stream of solids is removed through a drop pipe, wherein the stream of solids removed from the solids container is fluidized at the bottom of the downpipe by supplying a conveying gas and is transported to a higher level by means of a riser branching off from the downpipe, and the dwell time is varied by the stream of solids conveyed through the riser by means of the variable supply of the conveyor gas.

9. The process according to claim 7, **characterized in that** the warming device is a flash reactor or a plug-flow reactor.

10. The process according to claim 9, **characterized in that** the warming reactor is operated in countercurrent.

11. The process according to claim 7, **characterized in that** the temperature difference between the warming device and the residence time reactor is ≤30 K.


**Patentansprüche**

1. Verfahren zur thermischen Behandlung von körnigen Feststoffen, insbesondere zur Herstellung von Aluminiumoxid aus Aluminiumhydroxid, bei dem die Feststoffe in mindestens einer Vorwärmstufe erwärmt und dann in einem Reaktor bei 700 bis 1400 °C umgesetzt werden, **dadurch gekennzeichnet, dass** der mittlere Temperaturgradient der Feststoffe <15 K/s und die Verweilzeit der Feststoffe in mindestens einer Vorwärmstufe ≥15 s beträgt.

2. Verfahren nach Anspruch 1, **dadurch gekennzeichnet, dass** die Feststoffe in einer ersten Vorwärmstufe auf 140 bis 180 °C erwärmt und/oder in einer Vorwärmstufe stromabwärts der ersten Vorwärmstufe und/oder in der stromabwärts liegenden Vorwärmstufe auf 200 bis 400 °C erwärmt werden, wobei der durchschnittliche Temperaturgradient der Feststoffe <15 K/s und die Verweilzeit der Feststoffe >15 s beträgt.

3. Verfahren nach den Ansprüchen 1 oder 2, **dadurch gekennzeichnet, dass** der durchschnittliche Temperaturgradient der Feststoffe in den ersten 10% der Verweildauer über dem durchschnittlichen Temperaturgradienten über die gesamte Verweildauer liegt.

4. Verfahren nach Anspruch 3, **dadurch gekennzeichnet, dass** der durchschnittliche Temperaturgradient der Feststoffe in den ersten 10% der Verweildauer mehr als doppelt so groß ist als der durchschnittliche Temperaturgradient über die gesamte Verweildauer.

5. Verfahren nach einem der vorstehenden Ansprüche, **dadurch gekennzeichnet, dass** die Feststoffe im Gegenstrom mit dem Heizmedium in mindestens zwei hintereinander geschalteten Vorwärmstufen erwärmt werden.

6. Verfahren nach einem der vorstehenden Ansprüche, **dadurch gekennzeichnet, dass** mindestens eine Vorwärmstufe als Ringwirbelschicht ausgebildet ist.

7. Verfahren nach einem der vorstehenden Ansprüche, **dadurch gekennzeichnet, dass** die Feststoffe zunächst in einen Erwärmungsreaktor innerhalb mindestens einer Vorheizstufe geleitet und dann in einen Verweilzeitreaktor geleitet werden.

8. Verfahren nach Anspruch 7, **dadurch gekennzeichnet, dass** der Verweilzeitreaktor so betrieben wird, dass ein Feststoffstrom durch ein Fallrohr abgeführt wird, wobei der aus dem Feststoffbehälter entnommene Feststoffstrom am Boden des Fallrohres durch Zuführen eines Fördergases fluidisiert und mittels eines vom Fallrohr abzweigenden Steigrohrs auf ein höheres Niveau transportiert wird, und die Verweilzeit durch den durch das Steigrohr geförderten Feststoffstrom durch die variable Zufuhr des Förder- oder Gases variiert wird.

9. Verfahren nach Anspruch 7, **dadurch gekennzeichnet, dass** die Erwärmungsvorrichtung ein Flash-Reaktor oder ein Plug-Flow-Reaktor ist.

10. Verfahren nach Anspruch 9, **dadurch gekennzeichnet, dass** der Erwärmungsrelais im Gegenstrom betrieben wird.

**11.** Verfahren nach Anspruch 7, **dadurch gekennzeichnet, dass** die Temperaturdifferenz zwischen der Erwärmungsvorrichtung und dem Verweilzeitreaktor ≤30 K ist.

**Revendications**

**1.** Procédé de traitement thermique de solides granulaires, en particulier pour la production d'oxyde d'aluminium à partir d'hydroxyde d'aluminium, dans lequel les solides sont chauffés dans au moins une étape de préchauffage et sont ensuite mis à réagir dans un réacteur à 700 à 1 400 °C, **caractérisé en ce que** le gradient de température moyen des solides est à < 15 K/s et le temps de passage des solides est à ≥ 15 s dans au moins une étape de préchauffage.

**2.** Procédé selon la revendication 1, **caractérisé en ce que** les solides sont chauffés à 140 à 180 °C dans une première étape de préchauffage et/ou chauffés à 200 à 400 °C dans une étape de préchauffage en aval de la première étape de préchauffage et/ou dans l'étape de préchauffage en aval, le gradient de température moyen des solides est à < 15 K/s et le temps de passage des solides est à > 15 s.

**3.** Procédé selon la revendication 1 ou 2, **caractérisé en ce que** le gradient de température moyen des solides dans les premiers 10 % du temps de passage est au-dessus du gradient de température moyen sur tout le temps de passage.

**4.** Procédé selon la revendication 3, **caractérisé en ce que**, le gradient de température moyen des solides dans les premiers 10 % du temps de passage est plus de deux fois supérieur au gradient de température moyen sur tout le temps de passage.

**5.** Procédé selon l'une quelconque des revendications précédentes, **caractérisé en ce que** les solides sont chauffés à contre-courant avec le milieu de chauffage dans au moins deux étape de préchauffage reliées l'une à l'autre.

**6.** Procédé selon l'une quelconque des revendications précédentes, **caractérisé en ce qu'**au moins une étape de préchauffage est conçue sous la forme d'un lit fluidisé circulaire.

**7.** Procédé selon l'une quelconque des revendications précédentes, **caractérisé en ce que** les solides sont en premier envoyés vers un réacteur de réchauffement dans au moins une étape de préchauffage et sont ensuite envoyés vers un réacteur de temps de séjour.

**8.** Procédé selon la revendication 7, **caractérisé en ce que** le réacteur de temps de séjour est exploité de manière à ce qu'un flux de solides est éliminé par une colonne descendante, dans lequel le flux de solides éliminé du contenant de solides est fluidisé au fond du tuyau de descente en fournissant un gaz de transport et est transporté à un niveau supérieur au moyen d'une colonne montante se séparant du tuyau de descente, et le temps de passage varie en fonction du flux de solides transportés à travers la colonne montante au moyen de l'alimentation variable du gaz de transport.

**9.** Procédé selon la revendication 7, **caractérisé en ce que** le dispositif de chauffage est un réacteur flash ou un réacteur à écoulement piston.

**10.** Procédé selon la revendication 9, **caractérisé en ce que** le réacteur de chauffage est exploité à contre-courant.

**11.** Procédé selon la revendication 7, **caractérisé en ce que** la différence de température entre le dispositif de chauffage et le réacteur de temps de séjour est ≤ 30 K.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2605651 A1
- EP 0861208 B1
- DE 10260739 B3
- EP 1575871 B1
- WO 2009026989 A
- WO 2008077462 A2
- DE 10269733 A2